Europäisches Patentamt

European Patent Office

Office européen des brevets

(11) Publication number : **0 470 852 A2**

# EUROPEAN PATENT APPLICATION

(21) Application number : **91307337.5**

(51) Int. Cl.⁵ : **H02K 23/04**

(22) Date of filing : **09.08.91**

(30) Priority : **09.08.90 AU 1653/90**

(43) Date of publication of application :
**12.02.92 Bulletin 92/07**

(84) Designated Contracting States :
**DE ES FR GB IT SE**

(71) Applicant : **ZEXEL AUSTRALIA PTY. LTD.**
**46-52 Ferndell Street**
**Guildford, New South Wales 2161 (AU)**

(72) Inventor : **Pitches, Cedric Stanley**
**17 Dunbier Avenue**
**Lurnea, New South Wales 2170 (AU)**
Inventor : **James, Ron Victor**
**26 Leighton Close**
**North Haven, New South Wales 2443 (AU)**
Inventor : **Khamis, Ahmed Samy**
**Unit 3, 112 Bland Street**
**Ashfield, New South Wales 2131 (AU)**
Inventor : **Buckingham, Peter Max**
**3 Diffey Street**
**Yagoona, New South Wales 2199 (AU)**

(74) Representative : **Blanco White, Henry Nicholas et al**
**ABEL & IMRAY Northumberland House**
**303-306 High Holborn**
**London WC1V 7LH (GB)**

(54) **An electric motor assembly.**

(57)   An electric motor assembly comprising a housing made up of two shells 1 connected together. The housing contains two permanent magnets 20 providing a North and South pole respectively, and having an associated magnetic field. The magnets are positioned such that the junctions between the two shells of the housing both lie on the magnetic neutral axis of the magnetic circuit.

EP 0 470 852 A2

magnets
retained
under clips

FIGURE 3B

## TECHNICAL FIELD

This invention concerns an electric motor assembly. In particular it relates to an assembly of the type in which permanent magnets are located inside a housing. The magnets define a space, in which an armature is rotatably mounted, between North and south magnetic poles.

A number of motor assemblies are known, but they all suffer from one drawback or another. For instance, a first known assembly comprises a one-piece housing having a bottom and cylindrical sides, pressed from a single sheet of metal. Clips are rivetted to the interior of this housing in order to retain permanent magnets. This arrangement is expensive to manufacture since the housing itself is expensive to produce, and the rivetting operation adds further expense.

An alternative assembly, of less expensive construction, involves two shells with a magnet glued in each. The shells are held together by caps which are swagged to either end. This construction has the disadvantage that magnetic flux is weakened by the air gap reluctance at the junctions between the shells, which reduces the efficiency of the motor. The construction is also prone to falling apart when exposed to sever vibration.

## DISCLOSURE OF THE INVENTION

According to the present invention, there is provided an electric motor assembly comprising a housing made up of two shells connected together. The housing contains two magnets providing a North and South pole respectively, and having an associated magnetic circuit. The magnets are positioned such that the junctions between the two shells of the housing both lie on the magnetic neutral axis of the magnetic circuit.

Assemblies embodying the invention have the advantage that because the junctions between the shells are on the magnetic neutral axis of the magnets, flux loss is kept to a minimum.

Before the shells are assembled together, one or more clips may be positioned in each of the shells to retain the magnets. The clips are preferably staked to two or more embossings located centrally on the interior of each shell, so that each clip retains an end of a magnet. The clips may be double ended so that they retain an end of both magnets. The embossings are preferably formed by pressing half-shears into the shells from the exterior; this has the advantage of leaving the exterior free from protuberances.

Preferably the shells are both identical, and curved to form a hollow cylinder when they are connected together. They are advantageously connnected together by interengaging lock-dogs formed along their mating edges such that the male part of each shell engages the female part of the other to ensure no gaps are left between shells.

After the two shells have been connected together, a front end-cap containing an armature bearing is staked to one end of the assembly. Two magnets are then inserted into the assembly, and retained by the clips. The magnets are preferably curved on both sides to conform to the interior of the shells and to provide a cylindrical space inside the assembly for the armature. If desired, adhesive may also be used to attach the magnets to the housing.

Typically, the assembly is completed by inserting an armature and commutator, and fitting a rear end-cap containing another armature bearing.

## BRIEF DESCRIPTION OF THE DRAWINGS

The invention will now be described, by way of example only, with reference to the accompanying drawings, in which:

Figure 1 is a plan view of a shell blank for an assembly embodying the present invention;

Figure 2 is an end view of the shell blank of Figure 1 when formed ready for assembly;

Figure 3a is an elevational view showing two of the shells connected together and fitted with a front end cap; and

Figure 3b is an end view of the assembly of Figure 3a showing the position of magnets inserted into the assembly.

Figure 4a is an exploded view of an electric motor assembly embodying the present invention; and

Figure 4b is a plan view of the brush gear assembly of Figure 4.

## BEST MODES FOR CARRYING OUT THE INVENTION

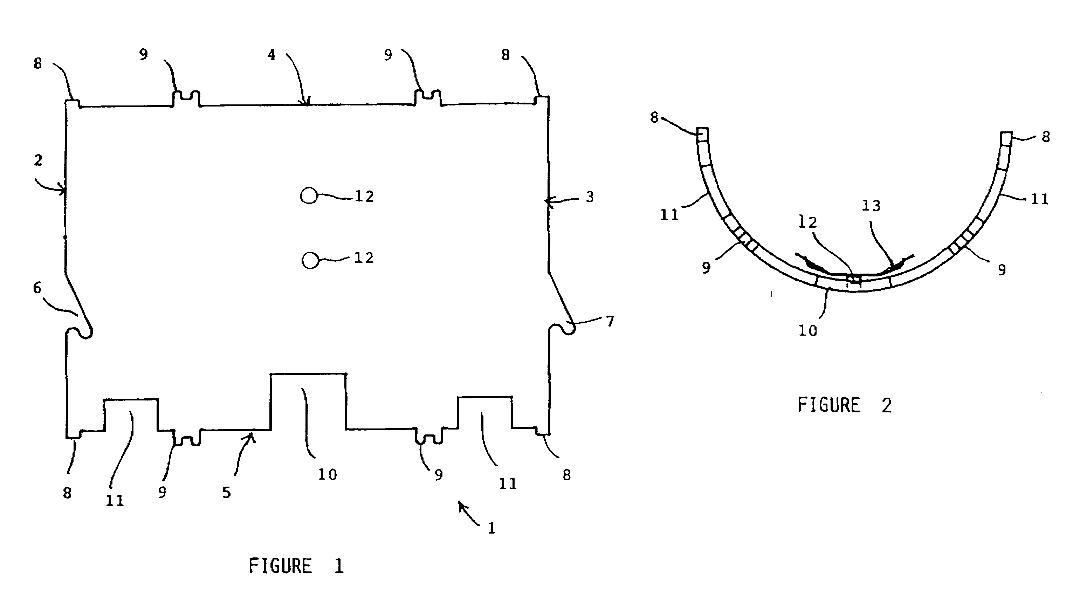

Referring now to Figure 1, shell blank 1 comprises a generally rectangular sheet of metal having side edges 2 and 3, a front edge 4, and a rear edge 5.

Edge 2 includes a female lock-dog 6 cut from the metal, and edge 3 includes a male lock-dog 7 corresponding to female lock-dog 6. Front edge 4 includes identical lugs a at either end and stakes 9 along its length. Rear edge 5 includes lugs 8 and stakes 9 similar to those of front edge 4, and a large central cutout 10 on either side of which are positioned smaller cutouts 11.

The blank is then formed into a half-circular shape, when seen from the front end, as shown in Figure 2. During this process two embossings 12 are formed on the interior of shell 1, mid-way between edges 2 and 3, by displacing material from the exterior of the shell; so called 'half-shears'. A double ended spring metal clip 13 is then staked to embossings 12.

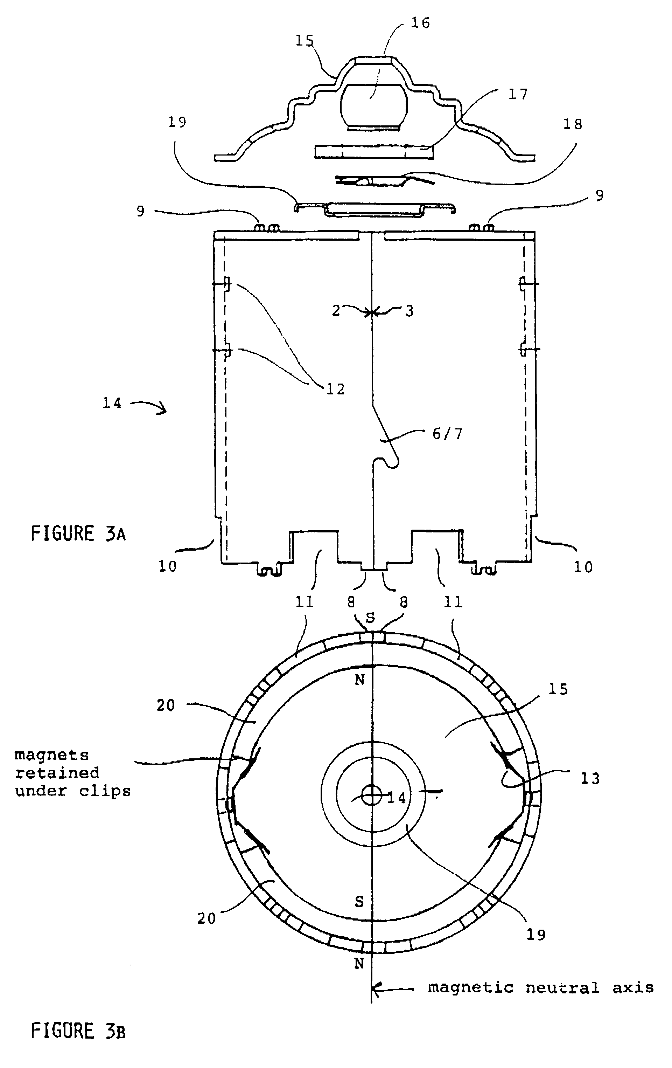

Two formed shells, including clips 13, are then brought together such that the side edges 2 of each are adjacent the side edges 3 of the other, and they are connected together by their male and female lock-dogs which inter-engage each other, as shown in Figure 3a, to form a hollow, cylindrical enclosure 14. Junctions are formed between the two shells where their side edges 2 and 3 meet. An end-cap 15 is then fitted to the front end of the enclosure and staked by means of stakes 9. Cap 15 includes a bearing 16, oil felt 17, bearing cage 18 and bearing retainer 19. The lugs 8 on the front edges of the shells are held together by notches in the perimeter of cap 15, and this provides additional locking action to hold the two shells together. The front end cap may be vented to allow air to circulate through the motor.

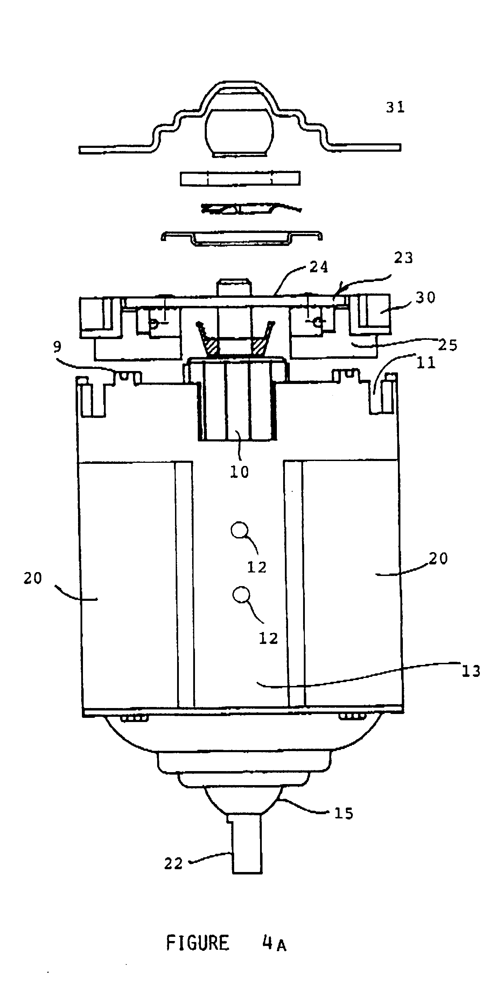

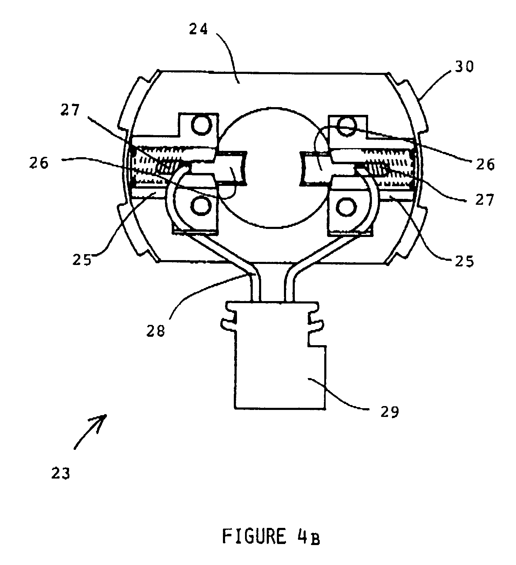

Magnets 20 are then fitted into the enclosure 14 from the open end and retained against the shells by clips 13, as shown in Figure 3b. The clips 13 hold magnets 20 such that they each overlap one of the junctions between the shells, and the magnets are designed such that their magnetic neutral axis passes through the junctions. The armature 21 is then inserted into the cylindrical space defined between the magnets so that its shaft 22 extends through front end-cap 15, as shown in Figure 4a. A brush gear assembly 23 is then fitted onto the rear of the armature.

Brush gear assembly 23 comprises a brush plate 24 with brush boxes 25 rivetted on both sides, as showy in Figure 4b. Brushes 26 are mounted in the brush boxes and urged forward by compression springs 27. Wires 28 extend from the brushes to a plug 29. Resilient mounts 30 are fitted to the exterior of the brush plate 24 to locate in cutouts 11. Plug 29 is located in cutout 10 of one of the shells, and an air spiggot is fitted into the other.

The assembly is completed by staking a rear end-cap 31 to stakes 9 along the rear edges of both shells. Rear end-cap 31 contains a bearing assembly identical to the front end-cap. The lugs 8 on the rear edges of the shells are held together by gaps in the perimeter of cap 31, and this provides additional locking action to hold the two shells together.

Although the invention has been described with reference to a particular embodiment, it should be appreciated that it may be embodied in many other forms. For instance, the magnets may be glued into place in addition to, or instead of, using the clips. Also the shape of the shell blanks may be quite different to that shown, and many different features may be present. The essential feature is that the magnetic neutral axis of magnets 20 should lie along the junctions between the two shells.

Also, the rear end cap may be modified to allow for the fitment of a motor with a double ended shaft. The housing may either be of plain finish, electrolitically plated, painted or powder coated.

## Claims

1. An electric motor assembly comprising a housing made up of two shells connected together;

    the housing contains two permanent magnets providing a North and South pole respectively, and having an associated magnetic field;

    the magnets are positioned such that the junctions between the two shells of the housing both lie on the magnetic neutral axis of the magnetic circuit.

2. An assembly according to 1, wherein the magnets are retained one or more by clips.

3. An assembly according to 2, wherein the clips are staked to one or more lugs located centrally on the interior of each shell such that each clip retains an end of a magnet.

4. An assembly according to 3, wherein the clips are double ended and each retain an end of both magnets.

5. An assembly according to 3 or 4, wherein the lugs are half-shears pressed into the shells.

6. An assembly according to any preceeding claim, wherein the two shells are identical, and form a hollow cylinder when connected together.

7. An assembly according to any preceeding claim, wherein the two shells are connected together by means of inter-engaging lock-dogs formed along their mating edges.

8. An assembly for an electric motor substantially as hereinbefore described with reference to the accompanying drawings.

FIGURE 2

FIGURE 1

FIGURE 3A

FIGURE 3B

magnets
retained
under clips

magnetic neutral axis

FIGURE 4 A

FIGURE 4B